# EUROPÄISCHE PATENTSCHRIFT

(11) **EP 3 638 555 B1**
(45) Veröffentlichungstag und Bekanntmachung des Hinweises auf die Patenterteilung: **09.06.2021**
(21) Anmeldenummer: 18720533.1
(22) Anmeldetag: 12.04.2018
(51) Int. Cl.: B60T 13/66

(54) **VERFAHREN UND STEUERVORRICHTUNG ZUM AUSFÜHREN EINER NOT- UND/ODER PANIKBREMSUNG**
METHOD AND CONTROL SYSTEM FOR CARRYING OUT AN EMERGENCY AND/OR PANIC BRAKING
PROCÉDÉ ET SYSTÈME POUR ACTUER UN FREINAGE D'URGENCE

(30) Priorität: 12.06.2017 DE 102017209892
(43) Veröffentlichungstag der Anmeldung: 22.04.2020
(73) Patentinhaber: Robert Bosch GmbH, 70442 Stuttgart (DE)
(72) Erfinder: SCHMIDT, Thomas, 74321 Bietigheim-Bissingen (DE); GERDES, Manfred, 71665 Vaihingen/Enz (DE); FLINNER, Marko, 97944 Boxberg-Bobstadt (DE); EWALD, Julian, 70191 Stuttgart (DE); WEIGEL, Markus, 74369 Loechgau (DE); KORETZ, Jochen, 74074 Heilbronn (DE); STELTER, Friedrich, 71263 Weil Der Stadt (DE); MAIER, Bernhard, 74223 Flein (DE)
(86) Internationale Anmeldenummer: PCT/EP2018/059400
(87) Internationale Veröffentlichungsnummer: WO 2018/228734

(56) Entgegenhaltungen:
- EP-A1- 1 172 272
- DE-A1-102012 202 006
- US-A1- 2009 039 702
- US-A1- 2009 045 672

## Beschreibung

Die Erfindung betrifft ein Verfahren zum Ausführen einer Not- und/oder Panikbremsung eines Fahrzeugs. Ebenso betrifft die Erfindung eine Steuervorrichtung für ein Bremssystem eines Fahrzeugs und ein Bremssystem für ein Fahrzeug.

### Stand der Technik

Aus dem Stand der Technik ist eine als hydraulischer Bremsassistent (HBA) bezeichnete Assistenzfunktion bekannt, mittels welcher bei einer Not- oder Panikbremsung eines Fahrzeugs automatisch und zeitweise unabhängig von einer Pedalbetätigung eines Fahrers des Fahrzeugs mittels mindestens einer Pumpe eines Bremssystems des Fahrzeugs eine Bremsdrucksteigerung in mindestens einem Radbremszylinder des Bremssystems bewirkbar sein soll. Auf diese Weise soll ein kürzerer Bremsweg des Fahrzeugs bis zu dessen Stillstand bewirkbar sein.

Die Offenlegungsschrift DE 10 2008 037 666 A1 offenbart ein Bremsregelsystem mit einem Hauptzylinder, um einen Hauptzylinderdruck zu erzeugen, einem Bremskraftverstärker, um den Hauptzylinder unterstützen, einer ersten Regeleinheit, um den Bremskraftverstärker zu regeln, einem hydraulischen Modulator, um einem Radzylinder einen Radzylinderdruck zuzuführen, und einer zweiten Regeleinheit, um den hydraulischen Modulator zu regeln. Der hydraulische Modulator umfasst eine Druckquelle, z.B. eine Pumpe, um den Radzylinderdruck zu erhöhen. Die ersten und zweiten Regeleinheiten sind durch eine Datenübertragungsleitung miteinander verbunden. Das Bremsregelsystem umfasst ferner einen Verstärkerzustand-Übertragungsabschnitt, um durch die Datenübertragungsleitung einen Zustand eines Verstärkungssystems zu übertragen, das vom Bremskraftverstärker und der ersten Regeleinheit gebildet wird. Ein ähnliches System wird in Dokument US 2009/045672 A1 offenbart.

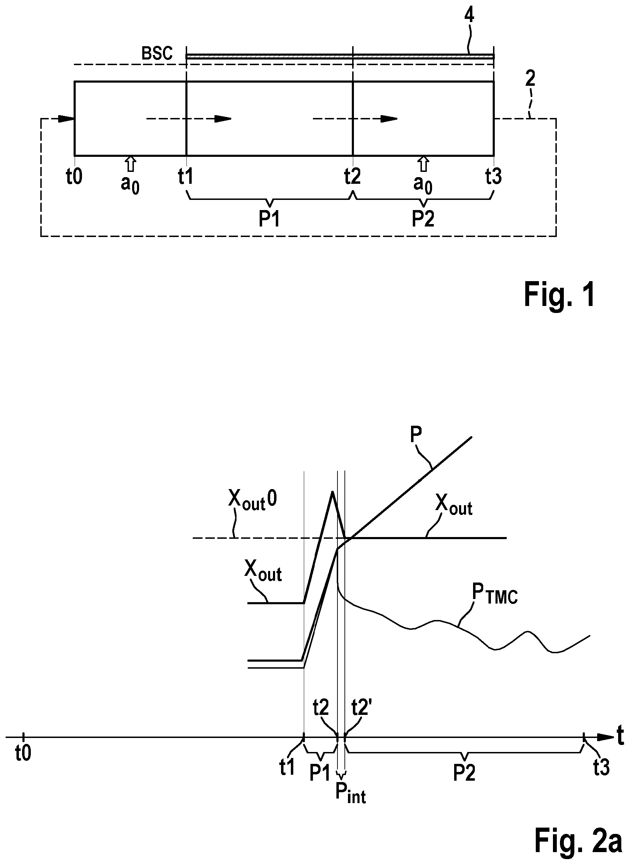

Fig. 1 zeigt ein Funktionsschema eines herkömmlichen hydraulischen Bremsassistenten, wie beispielsweise in der EP 2 630 015 B1 offenbart.

Bei einer mittels der Fig. 1 schematisch wiedergegebenen Not- und/oder Panikbremsung eines Fahrzeugs, welche zu einem Zeitpunkt t1 ausgelöst wird, wird während einer ersten Phase P1 der Not- und/oder Panikbremsung mindestens eine Pumpe BSC eines Bremssystems des Fahrzeugs (als mindestens eine Bremssystemkomponente BSC) in einem Hochleistungsmodus betrieben, so dass eine schnelle Bremsdrucksteigerung in mindestens einem Radbremszylinder des Bremssystems bewirkt wird. Es wird ausdrücklich darauf hingewiesen, dass während der ersten Phase P1 eine von einem Fahrer des Fahrzeugs aktuell angeforderte Soll-Fahrzeugverzögerung ao beim Ansteuern der mindestens einen Pumpe BSC nicht berücksichtigt wird. (Der Pfeil für die Soll-Fahrzeugverzögerung ao "fehlt" deshalb für die erste Phase P1 in Fig. 1.)

Um dem Fahrer (nach Bewirken der schnellen Bremsdrucksteigerung in mindestens einem Radbremszylinder seines Bremssystems) wieder eine Möglichkeit zum Beeinflussen einer aktuellen Verzögerung seines Fahrzeugs zu geben, wird ab einem Zeitpunkt t2 eine zweite Phase P2 der Not- und/oder Panikbremsung ausgeführt. Während der zweiten Phase P2 wird die mindestens eine Pumpe BSC unter Berücksichtigung der von dem Fahrer des Fahrzeugs aktuell angeforderten Soll-Fahrzeugverzögerung ao betrieben, so dass während der zweiten Phase P2 mittels der mindestens einen Pumpe BSC eine Verzögerung des Fahrzeugs gemäß der aktuell angeforderten Soll-Fahrzeugverzögerung a₀ oder einer Funktion der aktuell angeforderten Soll-Fahrzeugverzögerung ao bewirkt wird.

Wie mittels eines Pfeils 2 in Fig. 1 bildlich wiedergegeben ist, können die beiden Phasen P1 und P2 nach einem Abbrechen/Beenden der Not- und/oder Panikbremsung zu einem Zeitpunkt t3 beliebig oft wiederholt werden. Außerdem ist mittels einer zwischen den Zeiten t1 bis t3 durchgehenden (ununterbrochenen) Linie 4 in Fig. 1 bildlich wiedergegeben, dass in beiden Phasen P1 und P2 lediglich die mindestens eine Pumpe BSC des Bremssystems zum Bewirken von Bremsdrucksteigerungen in dem mindestens einen Radbremszylinder des Bremssystems eingesetzt wird.

### Offenbarung der Erfindung

Die Erfindung schafft ein Verfahren zum Ausführen einer Not- und/oder Panikbremsung eines Fahrzeugs mit den Merkmalen des Anspruchs 1, eine Steuervorrichtung für ein Bremssystem eines Fahrzeugs mit den Merkmalen des Anspruchs 10 und ein Bremssystem für ein Fahrzeug mit den Merkmalen des Anspruchs 11.

### Vorteile der Erfindung

Die vorliegende Erfindung schafft Möglichkeiten zum Nutzen eines elektromechanischen Bremskraftverstärkers während einer ersten Phase/Anfangsphase einer Not- und/oder Panikbremsung. Somit kann die in der Regel gegenüber einer Pumpe/Hydraulikpumpe eines Bremssystems wesentlich höhere Druckaufbaudynamik des elektromechanischen Bremskraftverstärkers zum schnellen Abbremsen eines Fahrzeugs mittels der vorliegenden Erfindung genutzt werden. Eine herkömmliche Begrenzung eines innerhalb der ersten Phase der Not- und/oder Panikbremsung erreichbaren Druckaufbaus in dem mindestens einen Radbremszylinder des Bremssystems auf einen mittels der mindestens einen Pumpe des Bremssystems maximal förderbaren Volumenstrom entfällt auch. Es wird außerdem darauf hingewiesen, dass während der zeitlich begrenzten ersten Phase der Not- und/oder Panikbremsung auf ein Ermitteln eines korrekten Werts für eine von dem Fahrer des Fahrzeugs aktuell angeforderte Soll-Fahrzeugverzögerung verzichtet werden kann, und deshalb die Auswirkungen des Betriebs des elektromechanischen Bremskraftverstärkers während der ersten Phase der Not- und/oder Panikbremsung auf einen Eingangsstangenweg einer Eingangsstange und auf einen Differenzweg zwischen der Eingangsstange und einem Ventilkörper des elektromechanischen Bremskraftverstärkers zu keinerlei Nachteilen führen.

Ein weiterer Vorteil der vorliegenden Erfindung besteht darin, dass während einer nach der ersten Phase ausgeführten zweiten Phase der Not- und/oder Panikbremsung die mindestens eine Pumpe (anstelle des elektromechanischen Bremskraftverstärkers) zum Steigern der Verzögerung des Fahrzeugs verwendet wird. Somit kann nach Ausführen der Zwischenphase mittels eines Ermittelns/Messens des Eingangsstangenwegs und/oder des Differenzwegs verlässlich erkennt/festgestellt werden, ob der Fahrer ein weiteres Weiterabbremsen des Fahrzeugs wünscht. Der Eingangsstangenweg und der Differenzweg werden durch den Betrieb der mindestens einen Pumpe in der zweiten Phase der Not- und/oder Panikbremsung nicht beeinträchtigt und können somit während der mittels der mindestens einen Pumpe in der zweiten Phase eventuell ausgeführten aktiven Verstärkung als Indikator(en) für eine aktuelle Anforderung einer Soll-Fahrzeugverzögerung (ungleich Null) durch den Fahrer verwendet werden.

Die vorliegende Erfindung schafft somit eine Kombination von spezifischen Vorteilen des elektromechanischen Bremskraftverstärkers und der mindestens einen Pumpe des Bremssystems. Die vergleichsweise hohe Dynamik des elektromechanischen Bremskraftverstärkers kann spezifisch für eine initiale Bremsdrucksteigerung in der ersten Phase/Anfangsphase der Not- und/oder Panikbremsung genutzt werden. Gerade zu einem derartigen Zeitpunkt ist eine hohe Druckaufbaudynamik erwünscht. Außerdem kann die vorteilhafte Eigenschaft genutzt werden, dass der Betrieb der mindestens einen Pumpe in der zweiten Phase der Not- und/oder Panikbremsung zum Steigern der Verzögerung des Fahrzeugs keine Auswirkungen auf den Eingangsstangenweg und den Differenzweg hat, und deshalb der Eingangsstangenweg und der Differenzweg in der zweiten Phase der Not- und/oder Panikbremsung zur verlässlichen Sensierung für eine aktuelle Anforderung einer Soll-Fahrzeugverzögerung (ungleich Null) durch den Fahrer ausgewertet werden können. Außerdem ist in der zweiten Phase der Not- und/oder Panikbremsung die Druckaufbaudynamik der mindestens einen Pumpe in der Regel ausreichend zum Steigern der Verzögerung des Fahrzeugs.

Es wird auch darauf hingewiesen, dass die vorliegende Erfindung für eine Vielzahl verschiedener Fahrzeugtypen nutzbar ist, ohne dass die jeweiligen Fahrzeuge mit neuen Bremssystemkomponenten auszustatten sind. Eine Realisierung der vorliegenden Erfindung ist deshalb relativ kostengünstig und erfordert keinen zusätzlichen Bauraum an einem Fahrzeug.

In einer vorteilhaften Ausführungsform des Verfahrens zum Ausführen einer Not- und/oder Panikbremsung eines Fahrzeugs wird während der zweiten Phase der Not- und/oder Panikbremsung ermittelt, ob der Fahrer eine Soll-Fahrzeugverzögerung (ungleich Null) aktuell anfordert, indem ein Eingangsstangenweg einer Eingangsstange des elektromechanischen Bremskraftverstärkers und/oder ein Differenzweg zwischen der Eingangsstange und einem Ventilkörper des elektromechanischen Bremskraftverstärkers ermittelt werden. Wie oben bereits erläutert wird, hat der Betrieb der mindestens einen Pumpe während der zweiten Phase der Not- und/oder Panikbremsung keine Auswirkungen auf den Eingangsstangenweg und den Differenzweg. Bei der hier beschriebenen Ausführungsform des Verfahrens kann somit verlässlich ermittelt werden, ob der Fahrer eine Soll-Fahrzeugverzögerung (ungleich Null) aktuell anfordert.

Zusätzlich kann während der zweiten Phase der Not- und/oder Panikbremsung der elektromechanische Bremskraftverstärker so betrieben werden, dass mittels des elektromechanischen Bremskraftverstärkers der Differenzweg zwischen der Eingangsstange und dem Ventilkörper gleich einem vorgegebenen Soll-Differenzweg eingestellt wird. Der Fahrer hat somit währen der zweiten Phase der Not- und/oder Panikbremsung ein standardgemäßes/angenehmes Bremsbetätigungsgefühl (Pedalgefühl).

Außerdem kann mindestens ein Umschaltventil des Bremssystems zwischen der ersten Phase und der Zwischenphase geschlossen werden. Der Bremsdruck in dem mindestens einen Radbremszylinder kann damit deutlich über den in dem Hauptbremszylinder vorliegenden Hauptbremszylinderdruck gesteigert werden.

Sofern gewünscht, kann während der ersten Phase der Not- und/oder Panikbremsung auch die mindestens eine Pumpe in einem für die erste Phase vorgegebenen Pumpenmodus betrieben werden, um mittels der mindestens einen in dem Pumpenmodus betriebenen Pumpe eine zusätzliche Bremsdrucksteigerung in dem mindestens einem Radbremszylinder zu bewirken. Dies kann zur zusätzlichen Reduzierung des Bremswegs des mittels der Not- und/oder Panikbremsung abgebremsten Fahrzeugs beitragen.

Beispielsweise werden als Solldruck ein unmittelbar vor Beginn der Not- und/oder Panikbremsung in dem Hauptbremszylinder vorliegender Hauptbremszylinderdruck und/oder als Sollkraft eine unmittelbar vor Beginn der Not- und/oder Panikbremsung mittels des Motors des elektromechanischen Bremskraftverstärkers ausgeübte Motorkraft festgelegt. Dies ist leicht ausführbar.

Vorzugsweise wird während der ersten Phase von dem Motor des in seinem Hochleistungsmodus betriebenen elektromechanischen Bremskraftverstärkers seine maximale Leistung angefordert. Dies bewirkt eine Bremsdrucksteigerung in dem mindestens einen Radbremszylinder des Bremssystems mit einem vergleichsweise hohen Gradienten, und damit eine signifikante Reduzierung eines Bremswegs des mittels der Not- und/oder Panikbremsung abgebremsten Fahrzeugs.

Bevorzugter Weise dauert die erste Phase der Not- und/oder Panikbremsung an, bis ein Ausgangsstangenweg einer Ausgangsstange des elektromechanischen Bremskraftverstärkers größer oder gleich einem vorgegebenen Höchst-Ausgangsstangenweg ist, bis mindestens ein Bremsdruck in dem mindestens einen Radbremszylinder größer oder gleich mindestens einem vorgegebenen Höchst-Bremsdruck ist, bis der Hauptbremszylinderdruck in dem Hauptbremszylinder gleich einem vorgegebenen Höchst-Hauptbremszylinderdruck ist, bis die Verzögerung des Fahrzeugs größer oder gleich einer vorgegebenen Höchst-Verzögerung ist oder bis eine vorgegebene Maximalzeit der ersten Phase überschritten ist. Alle hier genannten Ausführungsbeispiele verhindern ein Überbremsen des Fahrzeugs.

Beispielsweise wird die Not- und/oder Panikbremsung des Fahrzeugs ausgeführt, sofern eine Betätigungsgeschwindigkeit einer Betätigung eines Bremsbetätigungselements des Fahrzeugs durch den Fahrer zur Vorgabe der aktuell angeforderten Soll-Fahrzeugverzögerung außerhalb eines vorgegebenen Normalwertebereichs liegt und/oder eine Fahrzeugzustand- und/oder Umgebungserfassungs-Sensorik des Fahrzeugs die Not- und/oder Panikbremsung anfordert. Somit kann gezielt auf solche Situationen mittels des hier beschriebenen Verfahrens reagiert werden, in welchem der Fahrer einen Unfall befürchtet und deshalb sein Bremsbetätigungselement vergleichsweise schnell betätigt oder in welchem die Fahrzeugzustand- und/oder Umgebungserfassungs-Sensorik des Fahrzeugs ein Unfallrisiko aufgrund eines Zustands des Fahrzeugs und/oder einer Umgebungsbedingung erkennt.

Die vorausgehend beschriebenen Vorteile sind auch bei einer entsprechenden Steuervorrichtung für ein Bremssystem eines Fahrzeugs gewährleistet. Es wird darauf hingewiesen, dass die Steuervorrichtung entsprechend den oben beschriebenen Ausführungsformen des Verfahrens weiterbildbar ist.

Des Weiteren schafft auch ein korrespondierendes Bremssystem für ein Fahrzeug mit einer derartigen Steuervorrichtung, dem elektromechanischen Bremskraftverstärker, der mindestens einen Pumpe die oben beschriebenen Vorteile. Auch das Bremssystem ist gemäß den oben beschriebenen Ausführungsformen des Verfahrens zum Ausführen einer Not- und/oder Panikbremsung eines Fahrzeugs weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1: ein Funktionsschema eines herkömmlichen hydraulischen Bremsassistenten;
- Fig. 2a bis 2d: Funktionsschemata einer Ausführungsform des Verfahrens zum Ausführen einer Not- und/oder Panikbremsung eines Fahrzeugs; und
- Fig. 3: eine schematische Darstellung einer Ausführungsform der Steuervorrichtung, bzw. eines damit ausgestatteten Bremssystems eines Fahrzeugs.

### Ausführungsformen der Erfindung

Fig. 2a bis 2d zeigen Funktionsschemata einer Ausführungsform des Verfahrens zum Ausführen einer Not- und/oder Panikbremsung eines Fahrzeugs.

Das im Weiteren beschriebene Verfahren kann zum Abbremsen jedes Fahrzeugs/Kraftfahrzeugs genutzt werden, welches zumindest mit einem (einem Hauptbremszylinder seines Bremssystems vorgelagerten) elektromechanischen Bremskraftverstärker und mindestens einer Pumpe/Hydraulikpumpe ausgestattet ist. Unter dem elektromechanischen Bremskraftverstärker kann insbesondere ein iBooster verstanden werden. Als die mindestens eine Pumpe kann insbesondere mindestens eine Rückförderpumpe eingesetzt werden. Vorzugsweise weist das Bremssystem auch noch mindestens ein Umschaltventil auf, mittels dessen Schließen ein Bremsflüssigkeitstransfer aus mindestens einem angebundenen Radbremszylinder in den Hauptbremszylinder des Bremssystems selbst dann unterbindbar ist, wenn ein Bremsdruck p in dem jeweiligen Radbremszylinder über einem Hauptbremszylinderdruck p_{TMC} in dem Hauptbremszylinder liegt. (Über je ein parallel zu dem mindestens einen Umschaltventil angeordnetes Rückschlagventil ist jedoch ein Bremsflüssigkeitstransfer/Pumpen von Bremsflüssigkeit aus dem Hauptbremszylinder in den mindestens einen angebundenen Radbremszylinder selbst nach einem Schließen des mindestens einen Umschaltventils noch möglich.) Eine Ausführbarkeit des im Weiteren beschriebenen Verfahrens stellt somit keine besonderen Anforderungen an das mittels der ausgeführten Not- und/oder Panikbremsung abgebremste Fahrzeug/Kraftfahrzeug oder an dessen Bremssystem.

Fig. 2a zeigt ein Koordinatensystem, dessen Abszisse eine Zeitachse t ist. Mittels einer Ordinate des Koordinatensystems der Fig. 2a sind der Bremsdruck p in den Radbremszylindern, der Hauptbremszylinderdruck p_{TMC} in dem Hauptbremszylinder und ein Ausgangsstangenweg xₒᵤₜ des elektromechanischen Bremskraftverstärkers angegeben.

Zu einem Zeitpunkt t1 wird die Not- und/oder Panikbremsung des Fahrzeugs ausgelöst/gestartet. Die Not- und/oder Panikbremsung des Fahrzeugs wird beispielsweise ausgeführt, sofern eine Betätigungsgeschwindigkeit einer Betätigung eines Bremsbetätigungselements des Fahrzeugs (wie beispielsweise eine Betätigung eines Bremspedals) durch einen Fahrer des Fahrzeugs zur Vorgabe einer von dem Fahrer aktuell angeforderten Soll-Fahrzeugverzögerung außerhalb eines vorgegebenen Normalwertebereichs liegt. Somit kann gezielt in Situationen, in welchen der Fahrer einen Unfall befürchtet und deshalb das Bremsbetätigungselement "hastig" betätigt, mittels des Ausführens der im Weiteren beschriebenen Not- und/oder Panikbremsung das Fahrzeug vergleichsweise schnell in den Stillstand gebracht werden.

Alternativ oder ergänzend kann die im Weiteren beschriebene Not- und/oder Panikbremsung des Fahrzeugs auch ausgeführt werden, sofern eine Fahrzeugzustand- und/oder Umgebungserfassungs-Sensorik des Fahrzeugs dies anfordert. Die Fahrzeugzustand- und/oder Umgebungserfassungs-Sensorik kann mindestens einen Fahrzeugzustand-Sensor zum Ermitteln eines Zustands/einer Funktionsbeeinträchtigung mindestens einer Fahrzeugkomponente des Fahrzeugs und/oder mindestens einen Umgebungserfassungs-Sensor zum Erfassen einer Umgebung des Fahrzeugs umfassen. Beispielsweise kann die im Weiteren beschriebene Not- und/oder Panikbremsung des Fahrzeugs von der Fahrzeugzustand- und/oder Umgebungserfassungs-Sensorik angefordert werden, sofern ein bevorstehender Ausfall mindestens eines Fahrzeugbordnetzes des Fahrzeugs oder ein Hindernis in Fahrtrichtung des Fahrzeugs durch die Fahrzeugzustand- und/oder Umgebungserfassungs-Sensorik erkannt wird. Die im Weiteren beschriebene Not- und/oder Panikbremsung kann somit in einer Vielzahl von Situationen zur Reduzierung eines Unfallrisikos beitragen.

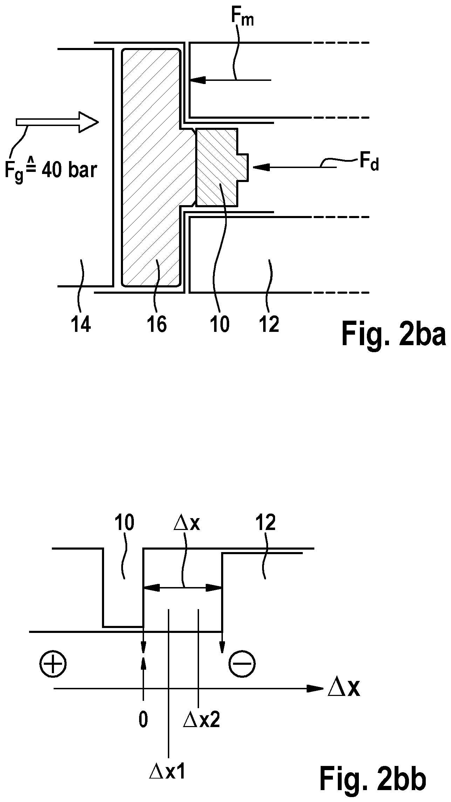

In dem Beispiel der Fig. 2a betätigt der Fahrer ab einem Zeitpunkt t0 das Bremsbetätigungselement seines Fahrzeugs, wobei (erst) kurz vor der Zeit t1 erkannt wird, dass die Betätigungsgeschwindigkeit der Betätigung des Bremsbetätigungselements außerhalb des vorgegebenen Normalwertebereichs liegt. Zwischen den Zeiten t0 und t1 wird der elektromechanische Bremskraftverstärker zum Einstellen eines Differenzwegs Δx zwischen einer Eingangsstange 10 des elektromechanischen Bremskraftverstärkers und einem Ventilkörper 12 (Valve Body, Boost Body) des elektromechanischen Bremskraftverstärkers gleich einem Soll-Differenzweg verwendet. Fig. 2ba und 2bb zeigen schematische Darstellungen/Funktionsschemata des elektromechanischen Bremskraftverstärkers während den Zeiten t0 und t1, wobei in Fig. 2ba nur eine Pastille der Eingangsstange 10 wiedergegeben ist. Erkennbar ist, dass mittels des Betriebs des elektromechanischen Bremskraftverstärkers eine (auf das Bremsbetätigungselement/Bremspedal ausgeübte) Fahrerbremskraft F_{d} des Fahrers um eine Motorkraft Fₘ eines Motors des elektromechanischen Bremskraftverstärkers gesteigert wird, so dass auf eine Ausgangsstange 14 des elektromechanischen Bremskraftverstärkers eine Summe aus den Kräften F_{d} und Fₘ wirkt. Dies bewirkt beispielsweise einen Hauptbremszylinderdruck p_{TMC} in dem Hauptbremszylinder von 40 bar und eine entsprechende Druckkraft Fₚ in dem Hauptbremszylinder, welche einer Einbremsbewegung der Ausgangsstange 14 entgegen wirkt. Bei einem derartigen Betrieb des elektromechanischen Bremskraftverstärkers ist eine (signifikante) Verformung einer Reaktionsscheibe 16 des elektromechanischen Bremskraftverstärkers jedoch nicht zu befürchten. Ein Eingangsstangenweg der Eingangsstange ist damit leicht und verlässlich (mittels eines entsprechenden Eingangsstangenweg-Sensors) ermittelbar/messbar und bezüglich der von dem Fahrer des Fahrzeugs (mittels einer Betätigung seines Bremspedals) aktuell angeforderte Soll-Fahrzeugverzögerung auswertbar. Auch der Differenzweg Δx zwischen der Eingangsstange 10 und dem Ventilkörper 12 ist zwischen den Zeiten t0 und t1 leicht und verlässlich (mittels eines entsprechenden Differenzweg-Sensors) ermittelbar/messbar. (Beispielhaft sind in Fig. 2bb ein erster Differenzweg Δx1 für ein getätigten Bremspedal und ein zweiter Differenzweg Δx2 für ein gelöstes Bremspedal angezeigt.)

Ab dem Zeitpunkt t1 wird die Not- und/oder Panikbremsung des Fahrzeugs gestartet. Bei der mittels des hier beschriebenen Verfahrens ausgeführte Not- und/oder Panikbremsung wird während einer ersten Phase P1 der Not- und/oder Panikbremsung, welche sich von dem Zeitpunkt t1 zu einem Zeitpunkt t2 erstreckt, die von dem Fahrer des Fahrzeugs aktuell angeforderte Soll-Fahrzeugverzögerung (absichtlich) ignoriert/nicht berücksichtigt. Beispielsweise werden der Eingangsstangenweg der Eingangsstange 10 des elektromechanischen Bremskraftverstärkers und/oder der Differenzweg Δx zwischen der Eingangsstange 10 und dem Ventilkörper 12 (absichtlich) ignoriert/nicht berücksichtigt. Außerdem wird während der ersten Phase P1 der elektromechanische Bremskraftverstärker in einem für die erste Phase vorgegebenen Hochleistungsmodus derart betrieben, dass mittels der gesteigerten Motorkraft Fₘ des Motors des in dem Hochleistungsmodus betriebenen elektromechanischen Bremskraftverstärkers der Hauptbremszylinderdruck p_{TMC} in dem Hauptbremszylinder (deutlich) gesteigert wird, und auf diese Weise eine (starke) Bremsdrucksteigerung in dem mindestens einen Radbremszylinder des Bremssystems bewirkt wird. (Der mindestens eine Radbremszylinder des Bremssystems ist während der ersten Phase P1 derart an dem Hauptbremszylinder angebunden, dass mittels des elektromechanischen Bremskraftverstärkers ein Bremsflüssigkeitstransfer aus dem Hauptbremszylinder in den mindestens einen Radbremszylinder auslösbar ist.) Es wird nochmals ausdrücklich darauf hingewiesen, dass der elektromechanische Bremskraftverstärker während der ersten Phase P1 unabhängig von der durch den Fahrer aktuell angeforderten Soll-Fahrzeugverzögerung angesteuert und betrieben wird.

Während der ersten Phase P1 wird damit eine starke, aber "undosierte" Verzögerung des Fahrzeugs (z.B. eine "undosierte" Vollverzögerung des Fahrzeugs) mittels des elektromechanischen Bremskraftverstärkers bewirkt. Dadurch wird eine Schwäche vieler Fahrer ausgeglichen, welche zwar nach Erkennen einer Notbremssituation (zwischen den Zeiten t0 und t1) ihr Bremsbetätigungselement/Bremspedal "hastig" betätigen, danach jedoch zögern, eine der Notbremssituation angemessene Soll-Fahrzeugverzögerung anzufordern. Insbesondere zögern viele Fahrer nach einem ersten Schreckmoment (zwischen den Zeiten t0 und t1), welcher das "hastige" Betätigen des Bremsbetätigungselements auslöst, damit, konsequent eine Vollverzögerung ihres Fahrzeugs anzufordern. Mittels des Betriebs des elektromechanischen Bremskraftverstärkers in dem vorgegebenen Hochleistungsmodus wird jedoch in der ersten Phase P1 automatisch eine signifikante Fahrzeugverzögerung bewirkt, so dass das anfängliche Zögern des (die Notbremssituation erkennenden aber noch nicht angemessen reagierenden) Fahrers beim Anfordern einer Soll-Verzögerung seines Fahrzeugs überbrückt wird. Insbesondere bewirkt der elektromechanische Bremskraftverstärker in der Regel bereits während der ersten Phase P1 der Not- und/oder Panikbremsung die ein schnelles Abbremsen des Fahrzeugs auslösende Bremsdrucksteigerung in dem mindestens einen Radbremszylinder. (Der elektromechanischen Bremskraftverstärker dient während der ersten Phase P1 damit nicht zur kraftmäßigen Unterstützung des Fahrers bei der Betätigung des Bremsbetätigungselements.)

Die Verwendung/Nutzung des elektromechanischen Bremskraftverstärkers (anstelle oder als Ergänzung zu der mindestens einen Pumpe des Bremssystems) steigert eine Druckaufbaudynamik der Bremsdrucksteigerung in dem mindestens einen Radbremszylinder signifikant. Der elektromechanischen Bremskraftverstärker weist im Vergleich mit der mindestens einen Pumpe des Bremssystems eine höhere Dynamik auf, und eignet sich somit vorteilhaft zur signifikanten Steigerung der Druckaufbaudynamik während der ersten Phase P1. Vor allem kann durch die Verwendung/Nutzung des elektromechanischen Bremskraftverstärkers (anstelle oder als Ergänzung zu der mindestens einen Pumpe des Bremssystems) zum Bewirken der dynamischen Bremsdrucksteigerung in dem mindestens einen Radbremszylinder ein Bremsweg des Fahrzeugs bis zu dessen Stillstand verkürzt werden.

Die erste Phase P1 kann als Vollverzögerungsphase der Not- und/oder Panikbremsung umschrieben werden. Unter dem für die erste Phase P1 vorgegebenen Hochleistungsmodus, in welchem der elektromechanische Bremskraftverstärker während der erste Phase P1 der Not- und/oder Panikbremsung betrieben wird, kann ein Betriebsmodus des elektromechanischen Bremskraftverstärkers verstanden werden, in welchem eine höhere Leistung angefordert wird als während eines "Normalbetriebs" des elektromechanischen Bremskraftverstärkers. Z.B. wird der elektromechanische Bremskraftverstärker während seines "Normalbetriebs" zum Einstellen des vorgegebenen Soll-Differenzwegs zwischen der Eingangsstange 10 und dem Ventilkörper 12 verwendet, wobei angeforderte Leistungen des elektromechanischen Bremskraftverstärkers während seines "Normalbetriebs" in einem Normalwerte-Leistungsbereich liegen. In diesem Fall kann die von dem in dem Hochleistungsmodus betriebenen elektromechanischen Bremskraftverstärker angeforderte Leistung oberhalb/außerhalb des Normalwerte-Leistungsbereichs liegen. Bevorzugter Weise ist der Hochleistungsmodus des elektromechanischen Bremskraftverstärkers ausreichend zum Bewirken eines eine Vollbremsung des Fahrzeugs auslösenden Bremsdrucks p in dem mindestens einen Radbremszylinder. Insbesondere kann von dem Motor des in seinem Hochleistungsmodus betriebenen elektromechanischen Bremskraftverstärkers seine maximale Leistung angefordert werden.

Sofern das Bremssystem das mindestens ein Umschaltventil aufweist, über welches der mindestens eine Radbremszylinder des Bremssystems mit dem Hauptbremszylinder verbunden ist, wird das mindestens eine Umschaltventil während der ersten Phase P1 in seinen offenen Zustand gesteuert. Es wird ausdrücklich darauf hingewiesen, dass, sofern das Bremssystem das mindestens eine Umschaltventil hat, mittels des Betriebs des elektromechanischen Bremskraftverstärkers in dem Hochleistungsmodus während der ersten Phase P1 Bremsflüssigkeit aus dem Hauptbremszylinder über das mindestens eine offene Umschaltventil in den mindestens einen Radbremszylinder transferiert wird.

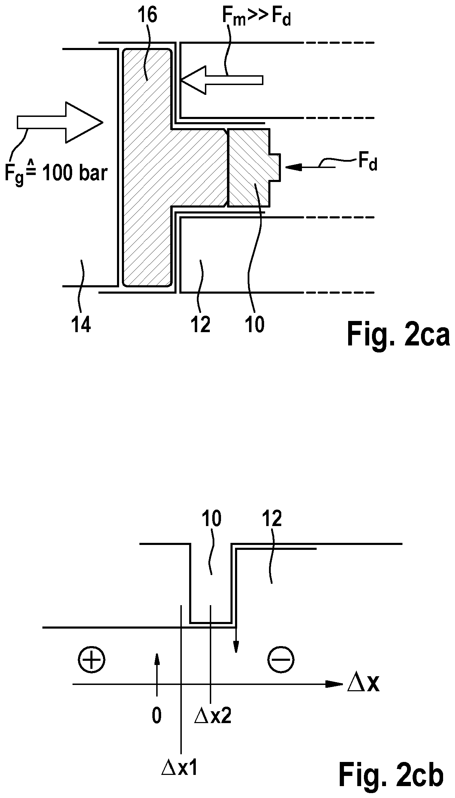

Fig. 2ca und 2cb zeigen schematische Darstellungen/Funktionsschemata des elektromechanischen Bremskraftverstärkers während der ersten Phase P1. Die Motorkraft Fₘ des Motors des elektromechanischen Bremskraftverstärkers ist während der ersten Phase P1 deutlich größer als die Fahrerbremskraft F_{d} des Fahrers. Dies bewirkt eine signifikante Steigerung des Hauptbremszylinderdrucks p_{TMC} in dem Hauptbremszylinder, z.B. auf 100 bar. Da die Fahrerbremskraft F_{d} des Fahrers die Reaktionsscheibe 16 des elektromechanischen Bremskraftverstärkers nicht mehr ausreichend gegenüber der Motorkraft Fₘ des Motors des elektromechanischen Bremskraftverstärkers und der Druckkraft Fₚ abstützt, wird die Reaktionsscheibe 16 stark verformt und gegen die Eingangsstange 10 "zurückgeschoben". Ein an der Eingangsstange 10 ermittelter Eingangsstangenweg eignet sich somit nicht mehr als Größe zur Erkennung/Bestimmung einer aktuellen Anforderung einer Soll-Fahrzeugverzögerung (ungleich Null) durch den Fahrer. Dies hat jedoch während der ersten Phase P1 keine Auswirkungen, da die erste Phase P1 der Not- und/oder Panikbremsung keinerlei Kenntnis über eine aktuelle Anforderung einer Soll-Fahrzeugverzögerung (ungleich Null) durch den Fahrer erfordert.

Die mindestens eine Pumpe des Bremssystems kann während der ersten Phase P1 der Not- und/oder Panikbremsung inaktiv vorliegen. Alternativ kann jedoch auch die mindestens eine Pumpe des Bremssystems bereits während der ersten Phase P1 in einem für die erste Phase P1 vorgegebenen Pumpenmodus betrieben werden, um mittels der mindestens einen in dem Pumpenmodus betriebenen Pumpe eine zusätzliche Bremsdrucksteigerung in dem mindestens einen Radbremszylinder zu bewirken.

Vorzugsweise dauert die erste Phase P1 der Not- und/oder Panikbremsung (nur) solange an, bis der (in Fig. 2a angegebene) Ausgangsstangenweg xₒᵤₜ der Ausgangsstange 14 des elektromechanischen Bremskraftverstärkers größer oder gleich einem vorgegebenen Höchst-Ausgangsstangenweg xₒᵤₜ0 ist, bis der mindestens eine (aktuelle) Bremsdruck p in dem mindestens einen Radbremszylinder größer oder gleich mindestens einem vorgegebenen Höchst-Bremsdruck ist, bis der Hauptbremszylinderdruck p_{TMC} in dem Hauptbremszylinder gleich einem vorgegebenen Höchst-Hauptbremszylinderdruck ist, bis eine (aktuelle) Verzögerung des Fahrzeugs größer oder gleich einer vorgegebenen Höchst-Verzögerung ist oder bis eine vorgegebene Maximalzeit der ersten Phase P1 überschritten ist. Dies verhindert ein Überbremsen des Fahrzeugs. Die erste Phase P1 der Not- und/oder Panikbremsung kann beispielsweise etwa 200 ms (Millisekunden) andauern.

Zwischen der ersten Phase P1/Vollverzögerungsphase der Not- und/oder Panikbremsung und einer zweiten Phase P2/Dosierphase der Not- und/oder Panikbremsung wird eine Zwischenphase Pᵢₙₜ (zwischen den Zeiten t2 und t2') ausgeführt. Sofern das Bremssystem das mindestens eine Umschaltventil aufweist, über welches der mindestens eine Radbremszylinder des Bremssystems mit dem Hauptbremszylinder verbunden ist, wird das mindestens eine Umschaltventil des Bremssystems zwischen der ersten Phase P1 und der Zwischenphase Pᵢₙₜ geschlossen. In der Zwischenphase Pᵢₙₜ der Not- und/oder Panikbremsung wird der Hauptbremszylinderdruck p_{TMC} durch Pumpen von Bremsflüssigkeit aus dem Hauptbremszylinder in den mindestens einen Radbremszylinder mittels der mindestens einen Pumpe des Bremssystems auf einen vorgegebenen oder festgelegten Solldruck reduziert. (Dies bewirkt in der Regel eine zusätzliche Steigerung des Bremsdrucks in den mindestens einen Radbremszylinder.) Außerdem wird die Motorkraft Fₘ des Motors des elektromechanischen Bremskraftverstärkers in der Zwischenphase Pᵢₙₜ auf eine vorgegebene oder festgelegte Sollkraft reduziert. Beispielsweise werden ein unmittelbar vor Beginn der Not- und/oder Panikbremsung in dem Hauptbremszylinder vorliegender Hauptbremszylinderdruck p_{TMC} als Solldruck festgelegt und/oder eine unmittelbar vor Beginn der Not- und/oder Panikbremsung mittels des Motors des elektromechanischen Bremskraftverstärkers ausgeübte Motorkraft Fₘ als Sollkraft festgelegt. Ebenso können der Solldruck und/oder die Sollkraft auch (fest) vorgegeben sein.

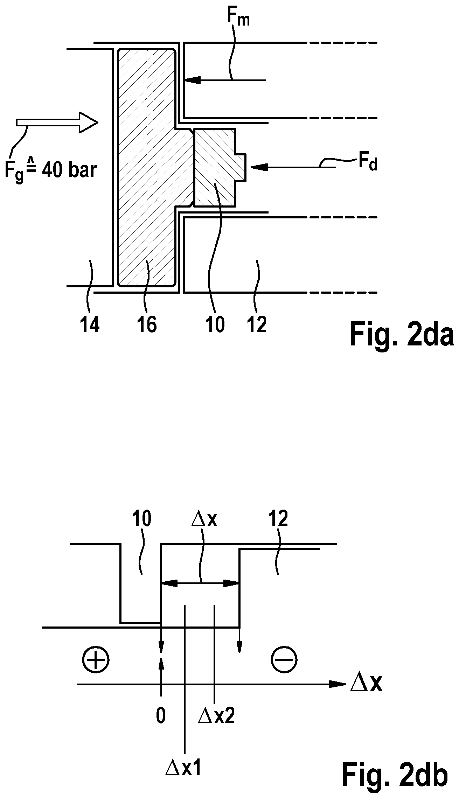

Fig. 2da und 2db zeigen schematische Darstellungen/Funktionsschemata des elektromechanischen Bremskraftverstärkers am Ende der Zwischenphase Pᵢₙₜ.

Die Motorkraft Fₘ und die (bei einem Hauptbremszylinderdruck p_{TMC} von 40 bar vorliegende) Druckkraft Fₚ korrespondieren so zu der Fahrerbremskraft F_{d} des Fahrers, dass die zuvorige Verformung der Reaktionsscheibe 16 des elektromechanischen Bremskraftverstärkers aus der ersten Phase P1 (siehe Fig. 2ca und 2cb) behoben ist. Ab der Ausführung der Zwischenphase Pᵢₙₜ kann somit wieder der an der Eingangsstange 10 ermittelte Eingangsstangenweg zur Erkennung/Feststellung einer aktuellen Anforderung eines Soll-Fahrzeugverzögerung (ungleich Null) durch den Fahrer genutzt werden.

Sobald der Hauptbremszylinderdruck p_{TMC} gleich dem vorgegebenen oder festgelegten Solldruck ist und die Motorkraft Fₘ des Motors des elektromechanischen Bremskraftverstärkers der vorgegebenen oder festgelegten Sollkraft entspricht, wird mit der zweiten Phase P2 der Not- und/oder Panikbremsung begonnen. In der zweiten Phase P2 der Not- und/oder Panikbremsung wird die in der ersten Phase P1 ausgeführte "undosierte" Verzögerung des Fahrzeugs beendet. Die Bremsdrucksteigerung in dem mindestens einen Radbremszylinder wird während der zweiten Phase P2 nur fortgesetzt, sofern der Fahrer (tatsächlich) eine Soll-Fahrzeugverzögerung (ungleich Null) aktuell anfordert. Gegebenenfalls, d.h. wenn der Fahrer (tatsächlich) eine Soll-Fahrzeugverzögerung (ungleich Null) aktuell anfordert, wird die Bremsdrucksteigerung in dem mindestens einen Radbremszylinder mittels der mindestens einen Pumpe während der zweiten Phase fortgesetzt wird. Andernfalls kann mit einem Bremsdruckabbau in dem mindestens einen Radbremszylinder begonnen werden. Damit ist automatisch sichergestellt, dass während der zweiten Phase P2 ein Verhalten/eine Fahrweise des Fahrzeugs einer von dem Fahrer erkannten/eingeschätzten Kritikalität der aktuellen Situation entspricht.

Die zweite Phase P2 der Not- und/oder Panikbremsung kann somit als eine Dosierphase bezeichnet werden. Eine Berücksichtigen der von dem Fahrer aktuell angeforderten Soll-Fahrzeugverzögerung (ungleich Null) erfolgt frühestens während der zweiten Phase P2 der Not- und/oder Panikbremsung. Optionaler Weise kann die von dem Fahrer aktuell angeforderte Soll-Fahrzeugverzögerung(ungleich Null) während der zweiten Phase P2 beim Abbremsen des Fahrzeugs berücksichtigt werden, indem die mindestens eine Pumpe des Bremssystems während der zweiten Phase P2 unter Berücksichtigung der aktuell angeforderten Soll-Fahrzeugverzögerung angesteuert wird. Die mindestens eine Pumpe des Bremssystems kann insbesondere während der zweiten Phase P2 derart betrieben werden, dass das Fahrzeug während der zweiten Phase P2 mit einer Verzögerung gemäß der aktuell angeforderten Soll-Fahrzeugverzögerung oder einer Funktion der aktuell angeforderten Soll-Fahrzeugverzögerung abgebremst wird, bis die zweite Phase P2 zu einem Zeitpunkt t3 beendet wird. (Während der zweiten Phase P2 kann mittels der mindestens einen Pumpe der Bremsdruck p in dem mindestens einen Radbremszylinder so angepasst werden, dass der Bremsdruck p in dem mindestens einen Radbremszylinder die Verzögerung des Fahrzeugs gemäß der aktuell angeforderten Soll-Fahrzeugverzögerung oder einer Funktion der aktuell angeforderten Soll-Fahrzeugverzögerung bewirkt.)

Die zweite Phase P2 der Not- und/oder Panikbremsung stellt weniger hohe Anforderungen an eine Dynamik der mindestens einen Pumpe des Bremssystems. Auf eine Verwendung des elektromechanischen Bremskraftverstärkers zur Drucksteigerung in dem mindestens einen Radbremszylinder des Bremssystems kann somit leicht verzichtet werden.

Während der zweiten Phase P2 der Not- und/oder Panikbremsung wird ermittelt, ob der Fahrer (tatsächlich) eine Soll-Fahrzeugverzögerung (ungleich Null) aktuell anfordert, indem der Eingangsstangenweg der Eingangsstange 10 des elektromechanischen Bremskraftverstärkers und/oder der Differenzweg Δx zwischen der Eingangsstange 10 und dem Ventilkörper 12 ermittelt werden. Ein Berücksichtigen der von dem Fahrer erkannten/eingeschätzten Kritikalität der aktuellen Situation ist damit verlässlich möglich. Vorzugsweise wird der elektromechanische Bremskraftverstärker während der zweiten Phase P2 der Not- und/oder Panikbremsung so betrieben, dass mittels des elektromechanischen Bremskraftverstärkers der Differenzweg Δx zwischen der Eingangsstange 10 und dem Ventilkörper 12 gleich dem vorgegebenen Soll-Differenzweg eingestellt wird. Der Fahrer hat somit während der zweiten Phase P2 schnell wieder ein standardgemäßes/gewohntes Pedalgefühl beim Betätigen des Bremspedals seines Fahrzeugs.

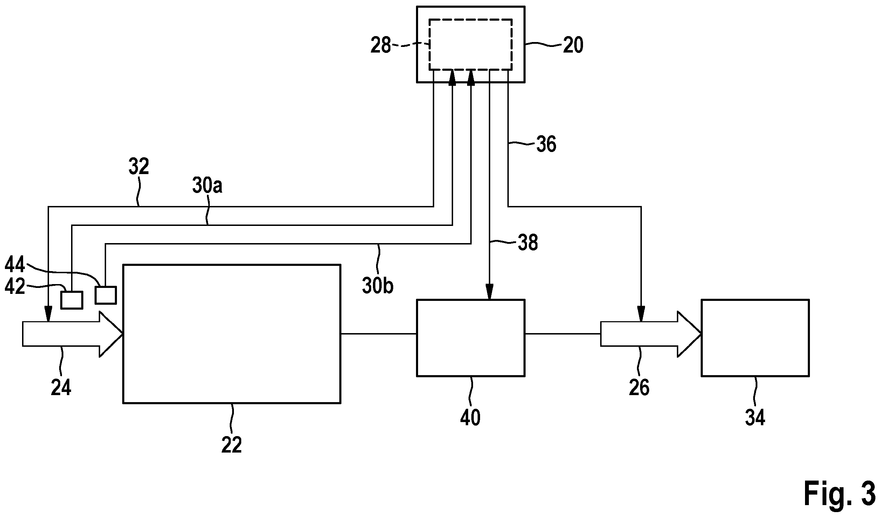

Fig. 3 zeigt eine schematische Darstellung einer Ausführungsform der Steuervorrichtung, bzw. eines damit ausgestatteten Bremssystems eines Fahrzeugs.

Die in Fig. 3 dargestellte Steuervorrichtung 20 ist für jedes Bremssystem einsetzbar, welches mit einem (einem Hauptbremszylinder 22 seines Bremssystems vorgelagerten) elektromechanischen Bremskraftverstärker 24 und mindestens einer Pumpe/Hydraulikpumpe 26 ausgestattet ist. Auch bezüglich eines Fahrzeugtyps/Kraftfahrzeugtyps stellt die Steuervorrichtung 20 keinerlei Anforderungen.

Die Steuervorrichtung 20 weist eine Elektronikeinrichtung 28 auf, welche dazu ausgelegt ist, unter Berücksichtigung mindestens eines an die Elektronikeinrichtung 2 bereitgestellten Sensorsignals 30a und 30b bezüglich einer von einem Fahrer des Fahrzeugs aktuell angeforderten Soll-Fahrzeugverzögerung den elektromechanische Bremskraftverstärker 24 und/oder die mindestens eine Pumpe 26 des Bremssystems anzusteuern. Insbesondere ist eine Not- und/oder Panikbremsung des Fahrzeugs mittels der Elektronikeinrichtung 28 auslösbar, indem die Elektronikeinrichtung 28 da; ausgelegt ist, während einer ersten Phase der Not- und/oder Panikbremsung das mindestens eine Sensorsignal 30a und 30b zu ignorieren, und während der ersten Phase den elektromechanischen Bremskraftverstärker 24 (mittels mindestens eines ersten Steuersignals 32) entsprechend einem auf der Steuervorrichtung 20 abgespeicherten Hochleistungsmodus-Programm des elektromechanischen Bremskraftverstärkers 24 anzusteuern. Dies bewirkt, dass mittels einer gesteigerten Motorkraft eines (nicht skizzierten) Motors des angesteuerten elektromechanischen Bremskraftverstärkers 24 ein Hauptbremszylinderdruck in dem Hauptbremszylinder 2 so steigerbar ist/gesteigert wird, dass eine Bremsdrucksteigerung in mindestens eine Radbremszylinder 34 des Bremssystems auf diese Weise (mit-)bewirkbar ist/(mit-)bewirkt wird.

Zusätzlich ist die Elektronikeinrichtung 28 dazu ausgelegt, in einer Zwischenphase de Not- und/oder Panikbremsung nach der ersten Phase die mindestens eine Pumpe 26 (mittels mindestens eines zweiten Steuersignals 36) derart anzusteuern, dass der Hauptbremszylinderdruck durch Pumpen von Bremsflüssigkeit aus dem Hauptbremszylinder 22 in den mindestens einen Radbremszylinder 34 auf einen vorgegebenen oder festgelegten Solldruck reduzierbar ist/reduziert wird. Dies kann eine weitere Bremsdrucksteigerung in dem mindestens einen Radbremszylinder 34 des Bremssystems bewirken. Des Weiteren ist die Elektronikeinrichtung 28 dazu ausgelegt, während der Zwischenphase den elektromechanischen Bremskraftverstärker 24 (mittels des mindestens einen ersten Steuersignals 32) so anzusteuern, dass die Motorkraft des Motors des elektromechanischen Bremskraftverstärkers 24 auf eine vorgegebene oder festgelegte Sollkraft reduzierba ist/reduziert wird.

Außerdem ist die Elektronikeinrichtung 28 dazu ausgelegt, während einer zweiten Phase der Not- und/oder Panikbremsung nach der Zwischenphase die Bremsdrucksteigerung in dem mindestens einen Radbremszylinder 34 nur fortzusetzen, sofern anhand des mindestens einen Sensorsignals 30a und 30b erkennbar ist, dass der Fahrer (tatsächlich) eine Soll-Fahrzeugverzögerung (ungleich Null) aktuell anfordert. Gegebenenfalls, d.h. wenn der Fahrer (tatsächlich) eine Soll-Fahrzeugverzögerung (ungleich Null) aktuell anfordert, ist die Elektronikeinrichtung 2 dazu ausgelegt, während der zweiten Phase die mindestens eine Pumpe 26 (mittels des mindestens einen zweiten Steuersignals 36) derart anzusteuern, dass die Bremsdrucksteigerung in dem mindestens einen Radbremszylinder 34 mittels der mindestens einen Pumpe 26 während der zweiten Phase fortsetzbar ist. Die Steuervorrichtung 20 bewirkt somit ebenfalls die oben schon beschriebenen Vorteile. Als vorteilhafte Weiterbildung kann die Elektronikeinrichtung 28 auch dazu ausgelegt sein, zwischen der ersten Phase und der Zwischenphase der Not- und/oder Panikbremsung mindestens ein Schließsignal 38 an mindestens ein Umschaltventil 4 des Bremssystems auszugeben.

Ebenso kann die Elektronikeinrichtung 28 dazu ausgelegt sein, zu ermitteln, ob der Fahrer (tatsächlich) eine Soll-Fahrzeugverzögerung (ungleich Null) aktuell anfordert, indem ein von einem Eingangsstangenweg-Sensor 42 bereitgestellter Eingangsstangenweg 30a einer (nicht dargestellten) Eingangsstange des elektromechanischen Bremskraftverstärkers 24 und/oder ein von einem Differenzweg-Sensor 44 bereitgestellter Differenzweg 30b zwischen der Eingangsstange und einem (nicht skizzierten) Ventilkörper des elektromechanischen Bremskraftverstärkers 24 ausgewertet werden. Die mindestens eine Pumpe 26 kann somit während der zweiten Phase unter Berücksichtigung des ermittelten Eingangsstangenwegs 30a und/oder des ermittelten Differenzwegs 30b (mittels des mindestens einen zweiten Steuersignals 36) angesteuert werden. Ergänzend kann während der zweiten Phase der Not- und/oder Panikbremsung der elektromechanische Bremskraftverstärker 24 (mittels des mindestens einen ersten Steuersignals 32) so betrieben werden, dass mittels des elektromechanischen Bremskraftverstärkers 24 der Differenzweg 30b zwischen der Eingangsstange und dem Ventilkörper gleich einem vorgegebenen Soll-Differenzweg eingestellt wird.

Optionaler Weise kann die Elektronikeinrichtung 28 dazu ausgelegt sein, die Not- und/oder Panikbremsung des Fahrzeugs auszulösen, sofern anhand des mindestens einen Sensorsignals 30a und 30b erkennbar ist, dass eine Betätigungsgeschwindigkeit einer Betätigung einer Bremsbetätigungselements des Fahrzeugs durch den Fahrer zur Vorgabe der aktuell angeforderten Soll-Fahrzeugverzögerung außerhalb eines vorgegebenen Normalwertebereichs liegt und/oder sofern eine (nicht dargestellte) Fahrzeugzustand- und/oder Umgebungserfassungs-Sensorik des Fahrzeugs die Not- und/oder Panikbremsung anfordert.

Insbesondere kann gemäß dem auf der Steuervorrichtung 20 abgespeicherten Hochleistungsmodus-Programm von dem Motor des elektromechanischen Bremskraftverstärkers 24 seine maximale Leistung angefordert werden. Als Alternative oder als Ergänzung dazu kann die Elektronikeinrichtung 28 dazu ausgelegt sein, während der ersten Phase der Not- und/oder Panikbremsung auch die mindestens eine Pumpe 26 gemäß einem auf der Steuervorrichtung 20 abgespeicherten Pumpenmodus-Programm zu betreiben, so dass mittels der mindestens einen betriebenen Pumpe 26 eine zusätzliche Bremsdrucksteigerung in dem mindestens einem Radbremszylinder 34 bewirkbar ist/bewirkt wird.

In einer nicht-dargestellten Weiterbildung der Elektronikeinrichtung 28 ist diese dazu ausgelegt, die erste Phase der Not- und/oder Panikbremsung (nur) so lange einzuhalten, bis ein an die Elektronikeinrichtung 28 bereitgestelltes Ausgangsstangenweg-Signal größer oder gleich einem vorgegebenen Höchst-Ausgangsstangenwegsignal ist, bis mindestens ein an die Elektronikeinrichtung 28 bereitgestelltes Bremsdrucksignal (mindestens eines nicht-skizzierten Bremsdrucksensors) größer oder gleich mindestens einem auf der Elektronikeinrichtung 28 abgespeicherten Höchst-Bremsdrucksignal ist, bis mindestens ein an die Elektronikeinrichtung 28 bereitgestelltes Hauptbremszylinderdrucksignal (mindestens eines nicht-skizzierten Vordrucksensors) größer oder gleich mindestens einem auf der Elektronikeinrichtung 28 abgespeicherten Höchst-Hauptbremszylinderdrucksignal ist, bis ein an die Elektronikeinrichtung 28 bereitgestelltes Verzögerungssignal (mindestens eines nicht-skizzierten Fahrzeug-Verzögerungssensors oder aus mindestens einem Raddrehzahlsensor abgeleitet) größer oder gleich einem auf der Elektronikeinrichtung 28 abgespeicherten Höchst-Verzögerungssignal ist oder bis eine vorgegebene Maximalzeit der ersten Phase überschritten ist.

## Patentansprüche

1. Verfahren zum Ausführen einer Not- und/oder Panikbremsung eines Fahrzeugs mit den Schritten:
Ignorieren einer von einem Fahrer des Fahrzeugs aktuell angeforderten Soll-Fahrzeugverzögerung während einer ersten Phase (P1) der Not- und/oder Panikbremsung, wobei während der ersten Phase (P1) eine Bremssystemkomponente (24) eines Bremssystems des Fahrzeugs in einem für die erste Phase (P1) vorgegebenen Hochleistungsmodus derart betrieben wird, dass mittels der in dem Hochleistungsmodus betriebenen Bremssystemkomponente (24) eine Bremsdrucksteigerung in mindestens einem Radbremszylinder (34) des Bremssystems bewirkt wird; und
Berücksichtigen einer von dem Fahrer aktuell angeforderten Soll-Fahrzeugverzögerung frühestens während einer späteren zweiten Phase (P2) der Not- und/oder Panikbremsung;
**dadurch gekennzeichnet, dass**
ein einem Hauptbremszylinder (22) des Bremssystems vorgelagerter elektromechanischer Bremskraftverstärker (24) als die Bremssystemkomponente (24) während der ersten Phase (P1) der Not- und/oder Panikbremsung derart betrieben wird, dass mittels einer gesteigerten Motorkraft (Fₘ) eines Motors des elektromechanischen Bremskraftverstärkers (24) ein Hauptbremszylinderdruck (p_{TMC}) in dem Hauptbremszylinder (22) gesteigert wird, wodurch die Bremsdrucksteigerung in dem mindestens einen Radbremszylinder (34) bewirkt wird;
in einer Zwischenphase (Pᵢₙₜ) der Not- und/oder Panikbremsung zwischen der ersten Phase (P1) und der zweiten Phase (P2) der Hauptbremszylinderdruck (p_{TMC}) durch Pumpen von Bremsflüssigkeit aus dem Hauptbremszylinder (22) in den mindestens einen Radbremszylinder (34) mittels mindestens einer Pumpe (26) des Bremssystems auf einen vorgegebenen oder festgelegten Solldruck reduziert wird und die Motorkraft (Fₘ) des Motors des elektromechanischen Bremskraftverstärkers (24) auf eine vorgegebene oder festgelegte Sollkraft reduziert wird; und
die Bremsdrucksteigerung in dem mindestens einen Radbremszylinder (34) während der zweiten Phase (P2) nur fortgesetzt wird, sofern der Fahrer eine Soll-Fahrzeugverzögerung aktuell anfordert, und gegebenenfalls die Bremsdrucksteigerung in dem mindestens einen Radbremszylinder (34) mittels der mindestens einen Pumpe (26) während der zweiten Phase (P2) fortgesetzt wird.

2. Verfahren nach Anspruch 1, wobei während der zweiten Phase (P2) der Not- und/oder Panikbremsung ermittelt wird, ob der Fahrer eine Soll-Fahrzeugverzögerung aktuell anfordert, indem ein Eingangsstangenweg (30a) einer Eingangsstange (10) des elektromechanischen Bremskraftverstärkers (24) und/oder ein Differenzweg (Δx, 30b) zwischen der Eingangsstange (10) und einem Ventilkörper (12) des elektromechanischen Bremskraftverstärkers (24) ermittelt werden.

3. Verfahren nach Anspruch 2, wobei während der zweiten Phase (P2) der Not- und/oder Panikbremsung der elektromechanische Bremskraftverstärker (24) so betrieben wird, dass mittels des elektromechanischen Bremskraftverstärkers (24) der Differenzweg (Δx, 30b) zwischen der Eingangsstange und dem Ventilkörper gleich einem vorgegebenen Soll-Differenzweg eingestellt wird.

4. Verfahren nach einem der vorhergehenden Ansprüche, wobei mindestens ein Umschaltventil (40) des Bremssystems zwischen der ersten Phase (P1) und der Zwischenphase (Pᵢₙₜ) geschlossen wird.

5. Verfahren nach einem der Ansprüche 1 bis 3, wobei während der ersten Phase (P1) der Not- und/oder Panikbremsung auch die mindestens eine Pumpe (26) in einem für die erste Phase (P1) vorgegebenen Pumpenmodus betrieben wird, um mittels der mindestens einen in dem Pumpenmodus betriebenen Pumpe (26) eine zusätzliche Bremsdrucksteigerung in dem mindestens einem Radbremszylinder (34) zu bewirken.

6. Verfahren nach einem der vorhergehenden Ansprüche, wobei als Solldruck ein unmittelbar vor Beginn der Not- und/oder Panikbremsung in dem Hauptbremszylinder (22) vorliegender Hauptbremszylinderdruck (p_{TMC}) festgelegt wird und/oder als Sollkraft eine unmittelbar vor Beginn der Not- und/oder Panikbremsung mittels des Motors des elektromechanischen Bremskraftverstärkers (24) ausgeübte Motorkraft (Fₘ) festgelegt wird.

7. Verfahren nach einem der vorhergehenden Ansprüche, wobei während der ersten Phase (P1) von dem Motor des in seinem Hochleistungsmodus betriebenen elektromechanischen Bremskraftverstärkers (24) seine maximale Leistung angefordert wird.

8. Verfahren nach einem der vorhergehenden Ansprüche, wobei die erste Phase (P1) der Not- und/oder Panikbremsung andauert, bis ein Ausgangsstangenweg (xₒᵤₜ) einer Ausgangsstange (26) des elektromechanischen Bremskraftverstärkers größer oder gleich einem vorgegebenen Höchst-Ausgangsstangenweg (xₒᵤₜ0) ist, bis mindestens ein Bremsdruck (p) in dem mindestens einen Radbremszylinder (34) größer oder gleich mindestens einem vorgegebenen Höchst-Bremsdruck ist, bis der Hauptbremszylinderdruck (p_{TMC}) in dem Hauptbremszylinder (22) gleich einem vorgegebenen Höchst- Hauptbremszylinderdruck ist, bis die Verzögerung des Fahrzeugs größer oder gleich einer vorgegebenen Höchst-Verzögerung ist oder bis eine vorgegebene Maximalzeit der ersten Phase (P1) überschritten ist.

9. Verfahren nach einem der vorhergehenden Ansprüche, wobei die Not- und/oder Panikbremsung des Fahrzeugs ausgeführt wird, sofern eine Betätigungsgeschwindigkeit einer Betätigung einer Bremsbetätigungselements des Fahrzeugs durch den Fahrer zur Vorgabe einer aktuell angeforderten Soll-Fahrzeugverzögerung außerhalb eines vorgegebenen Normalwertebereichs liegt und/oder eine Fahrzeugzustand- und/oder Umgebungserfassungs-Sensorik des Fahrzeugs die Not- und/oder Panikbremsung anfordert.

10. Steuervorrichtung (20) für ein Bremssystem eines Fahrzeugs mit:
einer Elektronikeinrichtung (28), welche dazu ausgelegt ist, unter Berücksichtigung mindestens eines an die Elektronikeinrichtung (28) bereitgestellten Sensorsignals (30a und 30b) bezüglich einer von einem Fahrer des Fahrzeugs aktuell angeforderten Soll-Fahrzeugverzögerung einen einem Hauptbremszylinder (22) des Bremssystems vorgelagerten elektromechanischen Bremskraftverstärker (24) und mindestens eine Pumpe (26) des Bremssystems anzusteuern,
wobei eine Not- und/oder Panikbremsung des Fahrzeugs mittels der Elektronikeinrichtung (28) auslösbar ist, indem die Elektronikeinrichtung (28) dazu ausgelegt ist:
- während einer ersten Phase (P1) der Not- und/oder Panikbremsung das mindestens eine Sensorsignal (30a und 30b) zu ignorieren, und während der ersten Phase (P1) den elektromechanischen Bremskraftverstärker (24) entsprechend eines auf der Steuervorrichtung (20) abgespeicherten Hochleistungsmodus-Programms des elektromechanischen Bremskraftverstärkers (24) derart anzusteuern, dass mittels einer gesteigerten Motorkraft (Fₘ) eines Motors des angesteuerten elektromechanischen Bremskraftverstärkers (24) ein Hauptbremszylinderdruck (p_{TMC}) in dem Hauptbremszylinder (22) so steigerbar ist, dass eine Bremsdrucksteigerung in mindestens einem Radbremszylinder (34) des Bremssystems bewirkbar ist;
- in einer Zwischenphase (Pᵢₙₜ) der Not- und/oder Panikbremsung nach der ersten Phase (P1) die mindestens eine Pumpe (26) derart anzusteuern, dass der Hauptbremszylinderdruck (p_{TMC}) durch Pumpen von Bremsflüssigkeit aus dem Hauptbremszylinder (22) in den mindestens einen Radbremszylinder (34) auf einen vorgegebenen oder festgelegten Solldruck reduzierbar ist, und den elektromechanischen Bremskraftverstärker (24) so anzusteuern, dass die Motorkraft (Fₘ) des Motors des elektromechanischen Bremskraftverstärkers (24) auf eine vorgegebene oder festgelegte Sollkraft reduzierbar ist; und
- die Bremsdrucksteigerung in dem mindestens einen Radbremszylinder (34) während einer zweiten Phase (P2) der Not- und/oder Panikbremsung nach der Zwischenphase (Pᵢₙₜ) nur fortzusetzen, sofern anhand des mindestens einen Sensorsignals (30a und 30b) erkennbar ist, dass der Fahrer eine Soll-Fahrzeugverzögerung aktuell anfordert, und gegebenenfalls während der zweiten Phase (P2) die mindestens eine Pumpe (26) derart anzusteuern, dass die Bremsdrucksteigerung in dem mindestens einen Radbremszylinder (34) mittels der mindestens einen Pumpe (26) während der zweiten Phase (P2) fortsetzbar ist.

11. Bremssystem für ein Fahrzeug mit:
einer Steuervorrichtung (20) nach Anspruch 10;
dem elektromechanischen Bremskraftverstärker (24); und
der mindestens einen Pumpe (26).

## Claims

1. Method for carrying out emergency braking of a vehicle comprising the steps of:
ignoring a setpoint vehicle deceleration which is being currently requested by a driver of the vehicle, during a first phase (P1) of the emergency braking, wherein during the first phase (P1) a brake system component (24) of a brake system of the vehicle is operated in a high power mode, which is prespecified for the first phase (P1), in such a way that in an increase in brake pressure in at least one wheel brake cylinder (34) of the brake system is brought about by means of the brake system component (24) which is operated in the high power mode; and
taking into account a setpoint vehicle deceleration which is being currently requested by the driver, at the earliest during a later second phase (P2) of the emergency braking;
**characterized in that**
an electromechanical brake booster (24), which is positioned upstream of a master brake cylinder (22) of the brake system, is operated as the brake system component (24) during the first phase (P1) of the emergency braking in such a way that a master brake cylinder pressure (p_{TMC}) in the master brake cylinder (22) is increased by means of an increased motor power (Fₘ) of a motor of the electromechanical brake booster (24), as a result of which the increase in brake pressure in the at least one wheel brake cylinder (34) is brought about;
in an intermediate phase (Pᵢₙₜ) of the emergency braking between the first phase (P1) and the second phase (P2), the master brake cylinder pressure (p_{TMC}) is reduced to a prespecified or defined setpoint pressure by pumping brake fluid from the master brake cylinder (22) into the at least one wheel brake cylinder (34) by means of at least one pump (26) of the brake system, and the motor power (Fₘ) of the motor of the electromechanical brake booster (24) is reduced to a prespecified or defined setpoint force; and
the increase in brake pressure in the at least one wheel brake cylinder (34) is continued during the second phase (P2) only in so far as the driver currently requests a setpoint vehicle deceleration, and if appropriate the increase in brake pressure in the at least one wheel brake cylinder (34) is continued during the second phase (P2) by means of the at least one pump (26).

2. Method according to Claim 1, wherein during the second phase (P2) of the emergency braking it is determined whether the driver is currently requesting a setpoint vehicle deceleration by virtue of an input rod travel (30a) of an input rod (10) of the electromechanical brake booster (24) and/or differential travel (Δx, 30b) between the input rod (10) and a valve body (12) of the electromechanical brake booster (24) being determined.

3. Method according to Claim 2, wherein, during the second phase (P2) of the emergency braking, the electromechanical brake booster (24) is operated in such a way that the differential travel (Δx, 30b) between the input rod and the valve body is set to be equal to a prespecified setpoint differential travel by means of the electromechanical brake booster (24).

4. Method according to one of the preceding claims, wherein at least one switching valve (40) of the brake system is closed between the first phase (P1) and the intermediate phase (Pᵢₙₜ).

5. Method according to one of Claims 1 to 3, wherein during the first phase (P1) of the emergency braking the at least one pump (26) is also operated in a pump mode which is prespecified for the first phase (P1), in order to bring about an additional increase in brake pressure in the at least one wheel brake cylinder (34) by means of the at least one pump (26) which is operated in the pump mode.

6. Method according to one of the preceding claims, wherein a master brake cylinder pressure (p_{TMC}) which is present in the master brake cylinder (22) directly at the start of the emergency braking is defined as the setpoint pressure and/or a motor force (Fₘ) which is applied by means of the motor of the electromechanical brake booster (24) directly before the start of the emergency braking is defined as the setpoint force.

7. Method according to one of the preceding claims, wherein during the first phase (P1) the maximum power of the motor of the electromechanical brake booster (24) which is operated in its high power mode is requested.

8. Method according to one of the preceding claims, wherein the first phase (P1) of the emergency braking lasts until an output rod travel (xₒᵤₜ) of an output rod (26) of the electromechanical brake booster is larger than or equal to a prespecified maximum output rod travel (xₒᵤₜ0), until at least one brake pressure (p) in the at least one wheel brake cylinder (34) is higher than or equal to at least one prespecified maximum brake pressure, until the master brake cylinder pressure (p_{TMC}) in the master brake cylinder (22) is equal to a prespecified maximum master brake cylinder pressure, until the deceleration of the vehicle is greater than or equal to a prespecified maximum deceleration or until a prespecified maximum time of the first phase (P1) is exceeded.

9. Method according to one of the preceding claims, wherein the emergency braking of the vehicle is executed in so far as an actuation speed of actuation of a brake actuator element of the vehicle by the driver for prespecifying a currently requested setpoint vehicle deceleration lies outside a prespecified normal value range and/or a vehicle state sensor system and/or surroundings-sensing sensor system of the vehicle requests the emergency braking.

10. Control device (20) for a brake system of a vehicle having:
an electronic device (28) which is configured to actuate, while taking into account at least one sensor signal (30a and 30b) provided to the electronic device (28) and relating to a setpoint vehicle deceleration which is currently requested by a driver of the vehicle, an electromechanical brake booster (24) which is positioned upstream of a master brake cylinder (22) of the brake system, and at least one pump (26) of the brake system,
wherein emergency braking of the vehicle can be triggered by means of the electronic device (28) in that the electronic device (28) is configured:
- to ignore the at least one sensor signal (30a and 30b) during a first phase (P1) of the emergency braking, and to actuate the electromechanical brake booster (24) during the first phase (P1) in accordance with a high-power mode program, stored in the control device (20), of the electromechanical brake booster (24) in such a way that a master brake cylinder pressure (p_{TMC}) in the master brake cylinder (22) can be increased by means of an increased motor force (Fₘ) of a motor of the actuated electromechanical brake booster (24) in such a way that an increase in brake pressure can be brought about in at least one wheel brake cylinder (34) of the brake system;
- to actuate the at least one pump (26) in an intermediate phase (Pᵢₙₜ) of the emergency braking after the first phase (P1) in such a way that the master brake cylinder pressure (p_{TMC}) can be reduced to a prespecified or defined setpoint pressure by pumping brake fluid out of the master brake cylinder (22) into the at least one wheel brake cylinder (34), and to actuate the electromechanical brake booster (24) in such a way that the motor force (Fₘ) of the motor of the electromechanical brake booster (24) can be reduced to a prespecified or defined setpoint force; and
- to continue the increase in brake pressure in the at least one wheel brake cylinder (34) during a second phase (P2) of the emergency braking after the intermediate phase (Pᵢₙₜ) only in so far as it can be detected on the basis of the at least one sensor signal (30a and 30b) that the driver is currently requesting a setpoint vehicle deceleration, and if appropriate to actuate the at least one pump (26) during the second phase (P2) in such a way that the increase in brake pressure in the at least one wheel brake cylinder (34) can be continued during the second phase (P2) by means of the at least one pump (26).

11. Brake system for a vehicle having:
a control device (20) according to Claim 10;
the electromechanical brake booster (24); and
the at least one pump (26).

## Revendications

1. Procédé pour exécuter un freinage d'urgence et/ou de panique d'un véhicule, le procédé comprenant les étapes qui consistent à :
au cours d'une première phase (P1) du freinage d'urgence et/ou de panique, ignorer une consigne de ralentissement imposée par le conducteur du véhicule, un composant (24) du système de freinage du véhicule étant utilisé au cours de la première phase (P1) en un mode à haute puissance prédéterminé pour la première phase (P1) de telle sorte que l'utilisation du composant (24) du système de freinage en mode à haute puissance ait pour effet une augmentation de la pression de freinage dans un ou plusieurs cylindres (34) de roue du système de freinage et
ne tenir compte de la consigne de ralentissement imposée par le conducteur qu'au plus tôt au cours d'une deuxième phase (P2), ultérieure, du freinage d'urgence et/ou de panique,
**caractérisé en ce que**
un amplificateur électromécanique (24) de force de freinage utilisé comme composant (24) du système de freinage et raccordé en amont du cylindre principal de frein (22) du système de freinage est utilisé au cours de la première phase (P1) du freinage d'urgence et/ou de panique de telle sorte que la pression (p_{TMC}) qui règne dans le cylindre principal de frein (22) soit augmentée au moyen d'une augmentation de la force (Fₘ) d'un moteur de l'amplificateur électromécanique (24) de force de freinage, avec pour effet une augmentation de la pression de freinage dans le ou les cylindres (34) de frein de roue,
**en ce que** dans une phase intermédiaire (Pᵢₙₜ) de freinage d'urgence et/ou de panique située entre la première phase (P1) et la deuxième phase (P2), la pression (p_{TMC}) qui règne dans le cylindre principal de frein soit réduite à une pression de consigne prédéterminée ou définie, en pompant dans le ou les cylindres (34) de frein de roue du liquide de freinage provenant du cylindre principal de frein (22) au moyen d'une ou de plusieurs pompes (26) du système de freinage et la force (Fₘ) du moteur de l'amplificateur électromécanique (24) de force de freinage est réduite à une force de consigne prédéterminée ou définie et
**en ce que** l'augmentation de la pression de freinage dans le ou les cylindres (34) de frein de roue n'est poursuivie au cours de la deuxième phase (P2) que jusqu'à ce que le conducteur demande un ralentissement de consigne du véhicule et l'augmentation de la pression de freinage dans le ou les cylindres (34) de frein de roue au moyen de la ou des pompes (26) est éventuellement poursuivie au cours de la deuxième phase (P2).

2. Procédé selon la revendication 1, dans lequel au cours de la deuxième phase (P2) du freinage d'urgence et/ou de panique, on détermine si le conducteur demande un ralentissement de consigne du véhicule en déterminant le parcours (30a) d'une tringle d'entrée (10) de l'amplificateur électromécanique (24) de force de freinage et/ou une différence de parcours (Δx, 30b) entre la tringle d'entrée (10) et un corps de soupape (12) de l'amplificateur électromécanique (24) de force de freinage.

3. Procédé selon la revendication 2, dans lequel au cours de la deuxième phase (P2) du freinage d'urgence et/ou de panique, l'amplificateur électromécanique (24) de force de freinage est utilisé de telle sorte que la différence de parcours (Δx, 30b) entre la tringle d'entrée et le corps de soupape soit réglée à une différence de parcours de consigne prédéterminée, au moyen de l'amplificateur électromécanique (24) de force de freinage.

4. Procédé selon l'une des revendications précédentes, dans lequel au moins une soupape de commutation (40) du système de freinage est fermée entre la première phase (P1) et la phase intermédiaire (Pᵢₙₜ).

5. Procédé selon l'une des revendications 1 à 3, dans lequel au cours de la première phase (P1) du freinage d'urgence et/ou de panique, la ou les pompes (26) sont également utilisées en un mode de pompage prédéterminé pour la première phase (P1), pour obtenir au moyen de la ou des pompes (26) utilisées en mode de pompage une augmentation supplémentaire de la pression de freinage dans le ou les cylindres (34) de frein de roue.

6. Procédé selon l'une des revendications précédentes, dans lequel la pression de consigne définie est la pression (p_{TMC}) qui règne dans le cylindre principal de frein (22) immédiatement avant le début du freinage d'urgence et/ou de panique et/ou dans lequel la force de consigne définie est la force (Fₘ) exercée au moyen du moteur de l'amplificateur électromécanique (24) de force de freinage immédiatement avant le début du freinage d'urgence et/ou de panique.

7. Procédé selon l'une des revendications précédentes, dans lequel la puissance demandée au moteur de l'amplificateur électromécanique (24) de force de freinage utilisé en mode à haute puissance est maximale au cours de la première phase (P1).

8. Procédé selon l'une des revendications précédentes, dans lequel la première phase (P1) du freinage d'urgence et/ou de panique dure jusqu'à ce que le parcours (xₒᵤₜ) d'une tringle de sortie (26) de l'amplificateur électromécanique de force de freinage soit supérieur ou égal à un parcours de sortie maximum prédéterminé (xₒᵤₜ0) de la tringle de sortie, jusqu'à ce qu'au moins une pression de freinage (p) qui règne dans le ou les cylindres (34) de frein de roue soit supérieure ou égale à au moins une pression de freinage maximale prédéterminée, jusqu'à ce que la pression (p_{TMC}) qui règne dans le cylindre principal de frein (22) soit égale à une pression maximale prédéterminée dans le cylindre principal de frein, jusqu'à ce que le ralentissement du véhicule soit supérieur ou égal à un ralentissement maximum prédéterminé ou jusqu'à ce qu'une durée maximale prédéterminée de la première phase (P1) soit dépassée.

9. Procédé selon l'une des revendications précédentes, dans lequel le freinage d'urgence et/ou de panique du véhicule est exécuté pour autant qu'une vitesse d'actionnement d'un élément d'actionnement du véhicule par le conducteur en vue d'imposer un ralentissement de consigne du véhicule soit situé hors d'une plage prédéterminée de valeurs normales et/ou qu'un ensemble de capteurs de saisie de l'état du véhicule et/ou de l'environnement du véhicule impose le freinage d'urgence et/ou de panique.

10. Ensemble (20) de commande du système de freinage d'un véhicule, comprenant :
un dispositif électronique (28) configuré pour commander un amplificateur électromécanique (24) de force de freinage raccordé en amont d'un cylindre principal de frein (22) du système de freinage et une ou plusieurs pompes (26) du système de freinage en tenant compte d'au moins un signal (30a et 30b) de capteur délivré au dispositif électronique (28) et concernant un ralentissement de consigne du véhicule imposé par le conducteur du véhicule,
un freinage d'urgence et/ou de panique du véhicule pouvant être lancé au moyen du dispositif électronique (28) grâce au fait que le dispositif électronique (28) est configuré pour :
- au cours d'une première phase (P1) du freinage d'urgence et/ou de panique, ignorer le ou les signaux (30a et 30b) de capteur et au cours de la première phase (P1), commander l'amplificateur électromécanique (24) de force de freinage en correspondance à un programme de mode à haute puissance de l'amplificateur électromécanique (24) de force de freinage conservé en mémoire dans l'ensemble de commande (20), de telle sorte que la pression (p_{TMC}) qui règne dans le cylindre principal de frein (22) soit augmentée au moyen d'une augmentation de la force (Fₘ) d'un moteur de l'amplificateur électromécanique (24) de force de freinage asservi, avec pour effet une augmentation de la pression de freinage dans le ou les cylindres (34) de frein de roue,
- au cours d'une phase intermédiaire (Pᵢₙₜ) du freinage d'urgence et/ou de panique située après la première phase (P1), commander la ou les pompes (26) de telle sorte que la pression (p_{TMC}) qui règne dans le cylindre principal de frein puisse être réduite à une pression de consigne prédéterminée ou définie, en pompant dans le ou les cylindres (34) de frein de roue du liquide de freinage provenant du cylindre principal de frein (22) et
- commander l'amplificateur électromécanique (24) de force de freinage de telle sorte que la force (Fₘ) du moteur de l'amplificateur électromécanique (24) de force de freinage puisse être réduite à une force de consigne prédéterminée ou définie et
- ne poursuivre l'augmentation de la pression de freinage dans le ou les cylindres (34) de frein de roue au cours de la deuxième phase (P2) du freinage d'urgence et/ou de panique après la phase intermédiaire (Pᵢₙₜ) que jusqu'à ce qu'à l'aide du ou des signaux de capteur (30a et 30b), il puisse être détecté que le conducteur impose un ralentissement de consigne du véhicule et éventuellement commander la ou les pompes (26) au cours de la deuxième phase (P2) de telle sorte que l'augmentation de la pression de freinage dans le ou les cylindres (34) de frein de roue au moyen de la ou des pompes (26) puisse être poursuivie au cours de la deuxième phase (P2).

11. Système de freinage pour véhicule, présentant :
un ensemble de commande (20) selon la revendication 10,
un amplificateur électromécanique (24) de force de freinage et
la ou les pompes (26).
